# EUROPEAN PATENT APPLICATION

(11) **EP 2 778 347 A1**
(43) Date of publication of application: **17.09.2014**
(21) Application number: 13158604.2
(22) Date of filing: 11.03.2013
(51) Int. Cl.: F01D 5/28, F01D 5/14

(54) **Rotor blade assembly, turbomachine comprising a rotor blade assembly and method of assembling a rotor blade assembly**

(71) Applicant: Siemens Aktiengesellschaft, 80333 München (DE)
(72) Inventor: Nilsson, Ulf, Whetstone, Leicester, LE8 6HN (GB)
(74) Representative: Maier, Daniel Oliver

(57) **Abstract**

The invention relates to a rotor blade assembly comprising an aerofoil component (200), a root component (300) and a supplementary component (400). The aerofoil component (200) comprises an aerofoil shaped section (210) and an aerofoil connection section (220) for connecting the aerofoil component (200) with the root component (300). The root component (300) comprises a first platform section (310), a first root connection section (320) and a root section (330) arranged for securing the root component (300) to a further component, in particular a rotor disc. The supplementary component (400) comprises a second platform section (410) and a second root connection section (420). The aerofoil shaped section (210) comprises metal foam (101). Finally, the aerofoil component (200), the root component (300) and the supplementary component (400) are arranged in a way that the root component (300) and the supplementary component (400) are attached to each other; the first platform section (310) and the second platform section (410) build a common platform of the rotor blade assembly; the first root connection section (320) and the second root connection section (420) build a common cavity between the common platform and the root section (330); and the aerofoil connection section (220) is secured in the common cavity. The invention also relates to a turbomachine comprising such a rotor blade assembly. Finally, the invention also relates to a method of assembling such a rotor blade assembly.

## Description

### FIELD OF INVENTION

The present invention relates to a rotor blade, in particular a rotor blade of a turbomachine, e.g. of a gas turbine engine. The invention also relates to a turbomachine comprising such a rotor blade. Furthermore it relates to a method of assembling a rotor blade assembly.

### BACKGROUND OF THE INVENTION

A limiting factor in the design of a gas turbine engine is the size of an exit annulus area, e.g. a length, of a final turbine stage, which is the last stage before an exhaust diffuser. The larger a cross-section of the exit annulus area, the higher a mass flow throughput, i.e. a volume flow throughput, at the exit of the turbine for a given maximal flow velocity, ultimately leading to higher possible turbine efficiencies.

A large exit annulus area implies construction of large, i.e. long, rotor blades for a given mean diameter of a flow path. However, due to load restrictions imposed e.g. by a turbine disc where the rotor blades are secured to, the rotor blades are required to be relatively light.

Another requirement or challenge for the construction of rotor blades is high temperatures and a chemically aggressive environment that the rotor blades are potentially exposed to. Therefore, as an exhaust temperature of a modern gas turbine engine may for example range between 700 K (Kelvin) and 1000 K, the variety of materials from which to manufacture a rotor blade of the final turbine stage are limited.

Metal foam is a material that is known to be resistant to a certain extent against heat and oxidation. In general, metal foam is for example used in filters and heat exchangers.

US 2005/0111966 A1 describes the use of metal foam in a static power plant component, e.g. a static part of a gas turbine engine. The objective of the use of metal foam is a provision of openings in the component for realising an efficient cooling of the component.

US 2007/0122269 A1 proposes a possibility for weight reduction of a static gas turbine component, especially a static gas turbine component of an aircraft engine. A so-called thrust-weight ratio of the aircraft engine is reduced by forming the static gas turbine component of metal foam.

However, if the idea of using metal foam is transferred from a static gas turbine component to a rotor blade, problems arise. If, for example, the rotor blade, which typically consists of one single piece and comprises an aerofoil shaped section and a root section, was made of metal foam, the rotor blade would be lighter but the strength at the root section would be smaller, implying that the rotor blade cannot be fabricated in a longer shape than for a conventional rotor blade.

Thus, there is a need to design a rotor blade with a reduced weight but with a sufficient strength. More specifically, the rotor blade shall be resistant against high temperatures and it shall have the potential to be constructed as a long rotor blade in a large exit annulus area of a final stage of a turbomachine.

### SUMMARY OF THE INVENTION

This objective is achieved by the independent claims. The dependent claims describe advantages developments and modifications of the invention.

In accordance with the invention there is provided a rotor blade assembly comprising an aerofoil component, a root component and a supplementary component. The aerofoil component comprises an aerofoil shaped section and an aerofoil connection section for connecting the aerofoil component with the root component. The root component comprises a first platform section, a first root connection section and a root section arranged for securing the root component to a further component, in particular a rotor disc. The supplementary component comprises a second platform section and a second root connection section. The aerofoil shaped section comprises metal foam. Finally, the aerofoil component, the root component and the supplementary component are arranged in a way that the root component and the supplementary component are attached to each other; the first platform section and the second platform section build a common platform of the rotor blade assembly; the first root connection section and the second root connection section build a common cavity between the common platform and the root section; and the aerofoil connection section is secured in the common cavity.

Specifically to reduce weight of the rotor blade and thus to enable construction of a larger and longer rotor blade, the invention proposes to use metal foam as material. However, if the whole rotor blade was made of metal foam, the rotor blade would be on the one hand lighter compared to a conventional rotor blade, but on the other hand also less robust against forces and loads exerted on it. Therefore, sections of high load are proposed to remain fabricated conventionally, e.g. casted, forged, sintered or machined of metal, while sections with low load are proposed to be fabricated of metal foam.

The fabrication in a single piece of a rotor blade with an aerofoil shaped section made of metal foam is difficult. Therefore, fabrication of multiple rotor blade components which are subsequently assembled together to a rotor blade assembly is proposed. The reduced weight of the aerofoil component enables an increase in length of the aerofoil component without substantially increasing the load on the root section.

A metal foam or cellular metal is a porous metallic structure which has a significantly reduced density compared to a solid form of the same material. In other words, metal foam is a cellular structure consisting of a solid metal, containing a large volume fraction of gas-filled pores. The pores can be sealed, which imply a closed-cell foam, or they can form an interconnected network, referred to as an open-cell foam. Metal foam is characterised by a high porosity. More than 50 %, in particular between 75 % and 95 %, of a volume of metal foam may comprise a void space. Metal foam is available in many different metals, e.g. nickel. A density of the metal foam preferably increases towards the root section of the rotor blade as to optimise a stress level in the aerofoil component and the whole rotor blade. A further advantage of metal foam is its resistance against high temperatures above e.g. 700 K.

The root section which is arranged for securing the root component to a further component, in particular a rotor disc, may be monolithic. An advantage of a monolithic root component is that small tolerances, i.e. small manufacturing deviations, are possible to achieve. The tolerances of the root section of the rotor blade assembly according to the invention may thus be comparable to the tolerances of a conventional blade root.

A platform of a rotor blade in general limits a main fluid path of the turbomachine. More specifically, the platform may act as an inner wall of the main fluid path. In particular, the platform represents a boundary which is typically located radially inward with regard to an axis of rotation of the turbomachine.

The main fluid path may have an annular shape. Furthermore, the aerofoil shaped section may extend into the main fluid path.

In a first embodiment the common platform may comprise a leading edge side and a trailing edge side. The first platform section may comprise the leading edge side and the second platform section may comprise the trailing edge side.

The leading edge side is also denoted as an upstream side of the platform in front of the aerofoil component, i.e. facing a main flow direction in a flow path. The trailing edge side is also denoted as a downstream side of the platform behind the aerofoil component, i.e. facing away from the main flow direction in the flow path.

As a first example, the first platform section may be of a similar size as the second platform section. The common platform may then be approximately divided in half by the aerofoil component. Furthermore, the common platform may be divided in circumferential direction.

The term "axial" refers to a direction of a rotor axis and/or an axis of rotation of the rotor blade assembly, arranged and secured in a rotor disc of a rotor. Analogously, the term "circumferential" refers to a circumference of the rotor disc where the rotor blade assembly is arranged and secured in.

In another embodiment, the common platform may be split perpendicularly to the first example described above, i.e. the common platform may be split in axial direction.

In other words, the aerofoil component may comprise a suction side and a pressure side. The first platform section may adjoin the pressure side and the second platform section may adjoin the suction side.

The suction side of the aerofoil component may also be denoted as a convex side of the aerofoil component, the pressure side may also be denoted as a concave side of the aerofoil component.

Alternatively, the first platform section may adjoin the suction side and the second platform section may adjoin the pressure side.

In other words, the first platform section may adjoin one of the pressure side or the suction side and the second platform section may adjoin an opposite side, i.e. one of the suction side or the pressure side, respectively.

Furthermore, the first platform section and the second platform section may also join at an angle between 0° and 90°, as long as both platform sections together encompass the circumference of the aerofoil component. In principle there may also be an advantageous embodiment with a third platform section, where the common platform is built by the first platform section, the second platform section and the third platform section.

In a further embodiment the common cavity may be filled by the aerofoil connection section.

In other words, the common cavity may be occupied by the aerofoil connection section.

The common cavity may have a shape similar to a rectangular cuboid. In practice, the common cavity may also have a shape that cannot be described by a simple geometrical term.

The common cavity is built by an attachment or a connection of the first root connection section with the second root connection section. Thus, the common cavity lies between the common platform and the root section. The common cavity may be limited e.g. on one side by the common platform, on another side by the root section and on four further sides by walls, the walls comprising in particular the first root connection section and the second root connection section.

The aerofoil connection section may completely fill the common cavity or it may leave empty pockets. It is beneficial that the aerofoil component is prevented of moving substantially out of position after assembly and when in use. This does not exclude a possibility to potentially benefit from damping of blade vibrations by small frictional relative movements between the aerofoil connection section and the platform sections, i.e. the first platform section and the second platform sections.

In a further embodiment the common platform may comprise an aperture for the aerofoil shaped section.

The aperture may have a shape of a slit. Furthermore, the aperture may be comprised by the first platform section and by the second platform section.

In a further embodiment the aerofoil shaped section may have an aerofoil shaped axial extension and an aerofoil shaped circumferential extension; the aerofoil connection section may have an aerofoil connection axial extension and an aerofoil connection circumferential extension. Furthermore, the aerofoil connection axial extension may be greater than the aerofoil shaped axial extension and/or the aerofoil connection circumferential extension may be greater than the aerofoil shaped circumferential extension.

In other words, the aerofoil connection section may be built such that it acts as a protrusion or a bulge with regard to the aerofoil shaped section with the aim of securing the aerofoil component with the root component and the supplementary component. It is beneficial if the aerofoil connection section is tightly and safely secured in the common cavity. Preferably the aerofoil connection section is thus like a socket or a pedestal and gives stability to the rotor blade assembly.

The aerofoil shaped axial extension and the aerofoil connection axial extension is in the following also simply denoted as axial extension. Analogously, the aerofoil shaped circumferential extension and the aerofoil connection circumferential extension is in the following also simply denoted as circumferential extension.

The axial extension and/or the circumferential extension may vary at different positions of the aerofoil component. In this case the axial extension and the circumferential extension signify a maximum axial extension or a maximum circumferential extension, respectively.

In a preferred embodiment the aerofoil shaped component, in particular the aerofoil shaped section, may comprise a coating for protection against corrosion and/or reduction of aerodynamic losses.

A surface of the metal foam may be not smooth and may therefore be prone to erosion and additional aerodynamic losses. To reduce this effect the surface of the aerofoil component may be coated which closes or fills the cells of the metal foam surface. The coating may provide a sealed surface separating the metal foam from the main flow path.

The aerofoil component thus may make the surface smooth. The coating may be of or may comprise the same material as the metallic foam, e.g. nickel, or may be of a different metal. Furthermore, also a conventional oxidation protection coating is possible.

In a further embodiment the rotor blade assembly may comprise an unshrouded aerofoil component.

As an example, the rotor blade assembly may have no shroud at the top, i.e. at a tip, of the aerofoil shaped section. Alternatively, an aerofoil shaped section may also comprise a shroud, i.e. the rotor blade assembly may comprise a shrouded aerofoil shaped section.

The invention is also directed towards a turbomachine, in particular a gas turbine engine, which comprises a rotor blade assembly as described above.

A turbomachine is a machine that transfers energy between a rotor and a fluid. More specifically, it transfers energy between a rotational movement of the rotor and a lateral flow of the fluid. A first type of a turbomachine is a turbine, e.g. a turbine section of a gas turbine engine. A turbine transfers energy from the fluid to the rotor. A second type of a turbomachine is a compressor, e.g. a compressor section of a gas turbine engine. A compressor transfers energy from the rotor to the fluid.

Preferably the turbomachine may comprise a plurality of rotor blade assemblies, in particular the plurality of rotor blade assemblies being located at the periphery of a rotor disc.

Furthermore, the turbomachine may comprise one or several stages of rotor discs, each rotor disc being equipped with a plurality of rotor blade assemblies.

In a further embodiment the turbomachine may comprise a further rotor blade assembly. The further rotor blade assembly may comprise a further common platform. The rotor blade assembly and the further rotor blade assembly may be assembled in the turbomachine and the common platform and the further common platform may be adjacent to each other. Furthermore, the common platform may be separated by the further common platform at least partially by a gap, the gap being sealed by a seal.

A function of the seal may be a reduction of a leakage flow. The seal may comprise a seal strip. The seal strip may be arranged perpendicularly to a main direction of the leakage flow. Furthermore, the seal strip may be located between opposing faces of the rotor blade assembly and the further rotor blade assembly, respectively.

In a further embodiment the turbomachine may comprise an exit annulus section and the rotor blade assembly may be a part of the exit annulus section.

The exit annulus area is an area of the turbomachine where a working fluid, e.g. a gas, is guided to an exit of the turbomachine. The turbomachine may comprise a first stage, at least one intermediate stage and a final stage. Preferably the exit annulus area belongs to the final stage. The final stage is in particular adjacent to an exhaust diffuser of the turbomachine.

The rotor blade assembly may particularly be located at the exit annulus area of the final stage. On the one hand, at this location large - i.e. long - rotor blades are needed, but on the other hand high temperatures exist. Thus, only few materials can be used, amongst them metal foam.

Finally, the invention is also directed towards a method of assembling a rotor blade assembly. The method comprises a first step, a second step and a third step. In the first step, a root component of the rotor blade assembly is fitted in position with, in particular slid onto, an aerofoil component of the rotor blade assembly, wherein the aerofoil component comprises an aerofoil shaped section and an aerofoil connection section and the root component comprises a first root connection section and a root section. In the second step, a second root connection section of a supplementary component of the rotor blade assembly is fitted around an exposed section of the aerofoil connection section. Finally, in the third step, the first root connection section is attached with the second root connection section, in particular by welding.

In this context, the exposed section of the aerofoil connection section means a part of the aerofoil connection section which has not been covered by the first root connection section during the first step of the method.

Welding is referred to as a fabrication that joins materials, e.g. metals, by causing coalescence. In order not to damage the aerofoil connection section during a welding operation an energy beam welding method is preferable, e.g. laser beam welding or electron beam welding. Those methods may offer a local energy release and a small size of a weld area. Alternatively, the first root connection section and the second root connection section are attached by soldering and/or brazing.

After having performed the third step of the method the aerofoil connection section is locked in place and can be operated - e.g. rotated about a rotor axis - such that it is able to transfer a centrifugal force acting on the rotor blade assembly to the root component, in particular to the root section, of the rotor blade assembly.

In a preferred embodiment the method is characterised in that the root component may comprise a first platform section and the supplementary component may comprise a second platform section. Furthermore, the method may comprise a further step, wherein the first platform section is attached with the second platform section, in particular by welding, and builds a common platform of the rotor blade assembly.

In another preferred embodiment the method may comprise an additional step, wherein the root section is slid into a slot of a further component, in particular a rotor disc of a turbomachine rotor.

The root section of the rotor blade assembly may comprise root lobes and root flanks. Additionally the slot may comprise corresponding slot lobes and corresponding slot flanks, i.e. the root section and the slot may comprise mating surfaces.

A last embodiment is characterised in that the additional step may be executed before the first step or may be executed after the third step.

An advantage of performing the additional step before the first step is that thus the root component is first secured with the rotor disc and then the rotor blade assembly is assembled step by step. An advantage of first assembling and then inserting the rotor blade assembly into the slot is that more freedom in assembling, in particular connecting, e.g. welding, of the different components can be achieved.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

Furthermore examples have been and will be disclosed in the following sections by reference to gas turbine engines. The invention is also applicable for any type of turbomachinery, e.g. compressors or steam turbines. Furthermore the general concept can be applied even more generally to any type of machine. It can be applied to rotating parts as well as stationary parts.

The aspects defined above and further aspects of the present invention are apparent from the examples of embodiment to be described hereinafter and are explained with reference to the examples of embodiment.

### BRIEF DESCRIPTION OF THE DRAWINGS

Embodiments of the invention will now be described, by way of example only, with reference to the accompanying drawings, of which:
- FIG. 1:: shows a perspective view of several prior art rotor blades;
- FIG. 2:: shows a perspective view of an aerofoil component of a rotor blade assembly according to the invention;
- FIG. 3:: shows a perspective view of a root component of a rotor blade assembly according to the invention;
- FIG. 4:: shows a perspective view of a supplementary component of a rotor blade assembly according to the invention;
- FIG. 5:: shows a perspective view of a root component of a rotor blade assembly, slid onto an aerofoil component of the rotor blade assembly;
- FIG. 6:: shows a top view of a rectangular aperture of a common cavity of a root component of a rotor blade assembly and a supplementary component of the rotor blade assembly;
- FIG. 7:: shows a top view of a crescentic aperture of a common cavity of a root component of a rotor blade assembly and a supplementary component of the rotor blade assembly;
- FIG. 8:: shows a top view of another crescentic aperture of a common cavity of a root component of a rotor blade assembly and a supplementary component of the rotor blade assembly;

The illustration in the drawing is schematically. It is noted that for similar or identical elements in different figures, the same reference signs will be used.

### DETAILED DESCRIPTION OF THE DRAWINGS

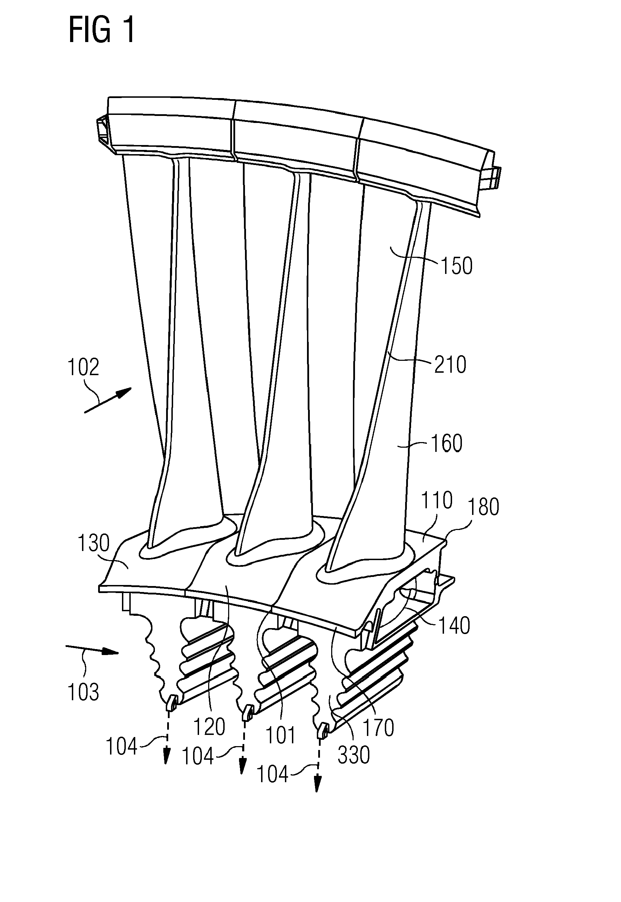

Referring to FIG. 1, a perspective view of several adjacent prior art rotor blades is shown, namely a first rotor blade 110, a second rotor blade 120 and a third rotor blade 130. The first rotor blade 110, the second rotor blade 120 and the third rotor blade 130 are adjacent to each other with regard to a circumferential direction 103. The first rotor blade 110 comprises an aerofoil shaped section 210 with a suction side 160 and a pressure side 150. The first rotor blade 110 furthermore comprises a platform with a leading edge side 170 and a trailing edge side 180, the trailing edge side 180 being opposite to the leading edge side 170 with regard to an axial direction 102. Beneath the platform a hollow space 140 is located. Following in a radial direction 104, the first rotor blade 110 furthermore comprises a root section 330. As shown exemplarily in FIG. 1, the root section 330 may have a firtree shape. The rotor blades 110, 120, 130 may be unshrouded or, as shown in FIG. 1, may be shrouded.

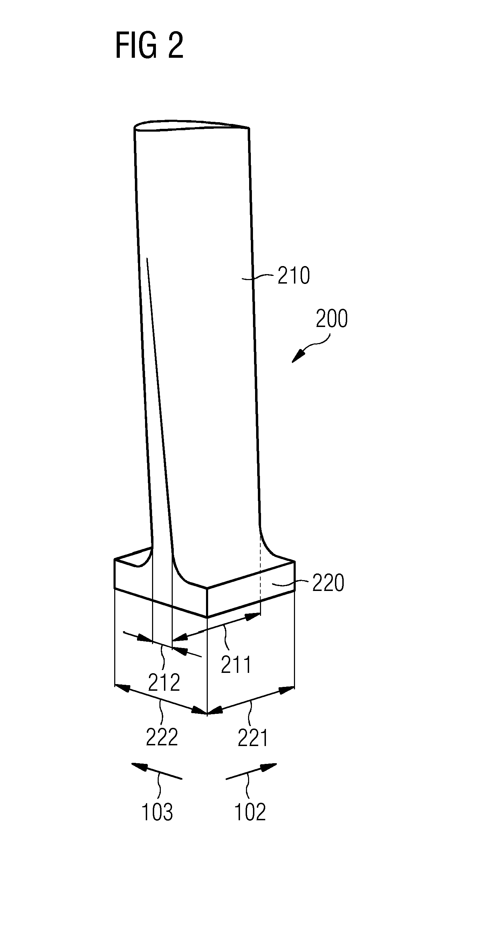

In FIG. 2 a perspective view of an aerofoil component 200 of a rotor blade assembly according to the invention is shown. In this embodiment of the invention an unshrouded aerofoil component 200 is shown. The invention is equally applicable to a shrouded aerofoil component. The aerofoil component 200 comprises an unshrouded aerofoil shaped section 210 and an aerofoil connection section 220.

The aerofoil shaped section 210 has a shape of an aerofoil. The aerofoil shaped section 210 can be relatively straight as shown in FIG. 2 or it can have a twisted shape as exemplarily shown in FIG. 1.

The aerofoil shaped section 210 features an aerofoil shaped axial extension 211, extending in axial direction 102 when assembled in a turbomachine - particularly in a gas turbine engine - and features an aerofoil shaped circumferential extension 212, extending in circumferential direction 103. Analogously, the aerofoil connection section 220 features an aerofoil connection axial extension 221 and an aerofoil connection circumferential extension 222, when assembled in a turbomachine. As shown exemplarily in FIG. 2, the aerofoil connection axial extension 221 may be similar to the aerofoil shaped axial extension 211, while the aerofoil connection circumferential extension 222 may be larger than the aerofoil shaped circumferential extension 212. Additionally or alternatively - depending on the size of the platform in relation to the cross section and orientation of the aerofoil component 200 relative to the sides of the platform - the aerofoil connection axial extension 221 may also be larger compared to the aerofoil shaped axial extension 211.

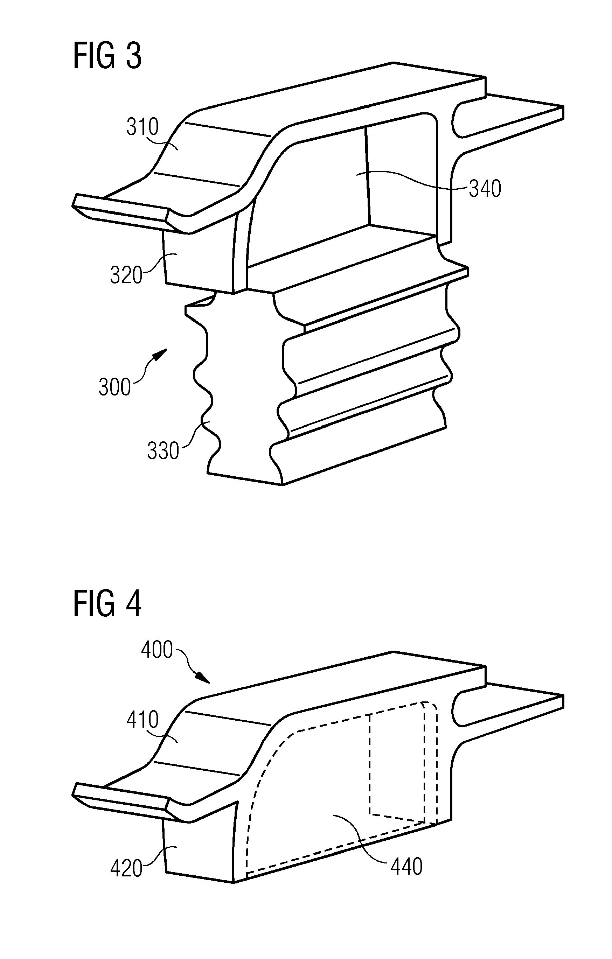

In FIG. 3 a perspective view of a root component 300 of a rotor blade assembly is shown. The root component 300 comprises a curved first platform section 310, a first root connection section 320, a root section 330 and a first cavity section 340. The root section 330 has a firtree shape. Furthermore, the root section 330 is monolithic such that a complete root of the rotor blade assembly is formed out of the root section 300. However, the first platform section 310 and the first root connection section 320 only form a part of a common platform and a part of a common root connection section, respectively. Thus, the common platform and the common root connection section are both not monolithic, i.e. are made of multiple parts, one part is shown in FIG. 3 and another part is shown in FIG. 4.

In FIG. 4 a perspective view of a supplementary component 400 of a rotor blade assembly is shown. The supplementary component 400 comprises a curved second platform section 410, a second root connection section 420 and a second cavity section 440.

The shape of the first platform section 310 and the second platform section 410 as well as the shape of the first root connection section 320 and the second root connection section 420 correspond to each other, respectively. Analogously, the first cavity section 340 and the second cavity section 440 correspond to each other. By connecting the first root connection section 320 and the second root connection section 420 with each other a common, i.e. a joint, cavity is built.

In order to assemble the rotor blade assembly the aerofoil component 200 is first fitted into the root component 300 and then locked in place by welding along adjacent faces the supplementary component 400 to the root component 300.

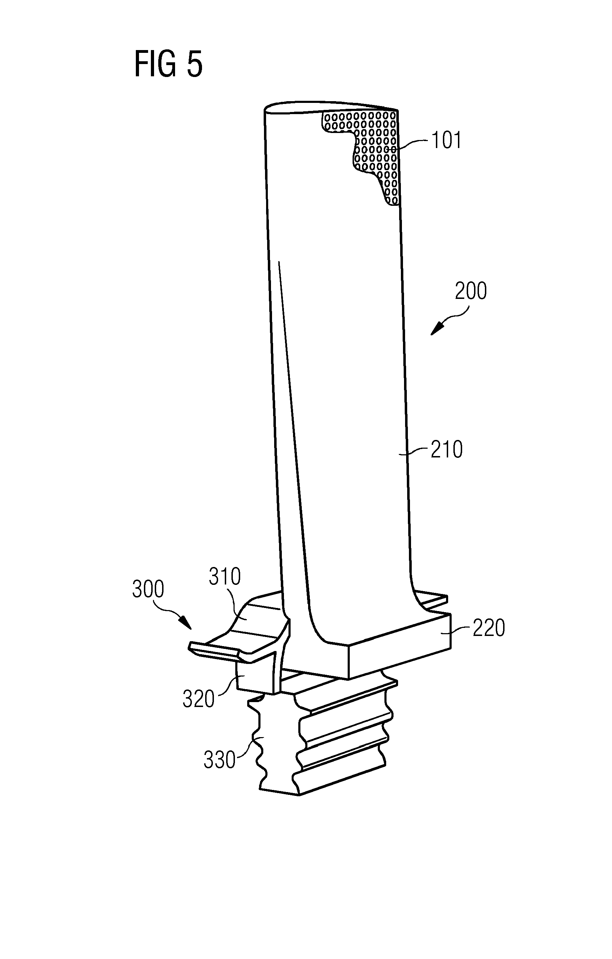

In FIG. 5, the root component 300 of the rotor blade assembly, slid onto the aerofoil component 200 of the rotor blade assembly is shown. The aerofoil component 200 comprises the aerofoil shaped section 210 and the aerofoil connection section 220. The aerofoil connection section 220 is partly enclosed, i.e. embraced, by the first root connection section 320. However, the aerofoil connection section 220 also comprises an exposed section. In a subsequent step, this exposed section of the aerofoil connection section 220 would be enclosed, i.e. embraced by the supplementary component 400 (not shown).

FIG. 5 also shows a section of the aerofoil shaped section 210 which comprises metal foam 101. The metal foam 101 features a porous metallic structure which has a significantly reduced density compared to a solid form of the same material. In this schematical figure the metal foam 101 is laid bare in order to illustrate the material. Nevertheless it is beneficial that the aerofoil shaped section 210 may be coated.

The aerofoil shaped section 210 of aerofoil component 200, the root component 300 and the supplementary component 400 may be coated with appropriate protection coatings, e.g. for oxidation and/or friction reduction as individual components before assembly or as one component after assembly including the welding step, i.e. the further step.

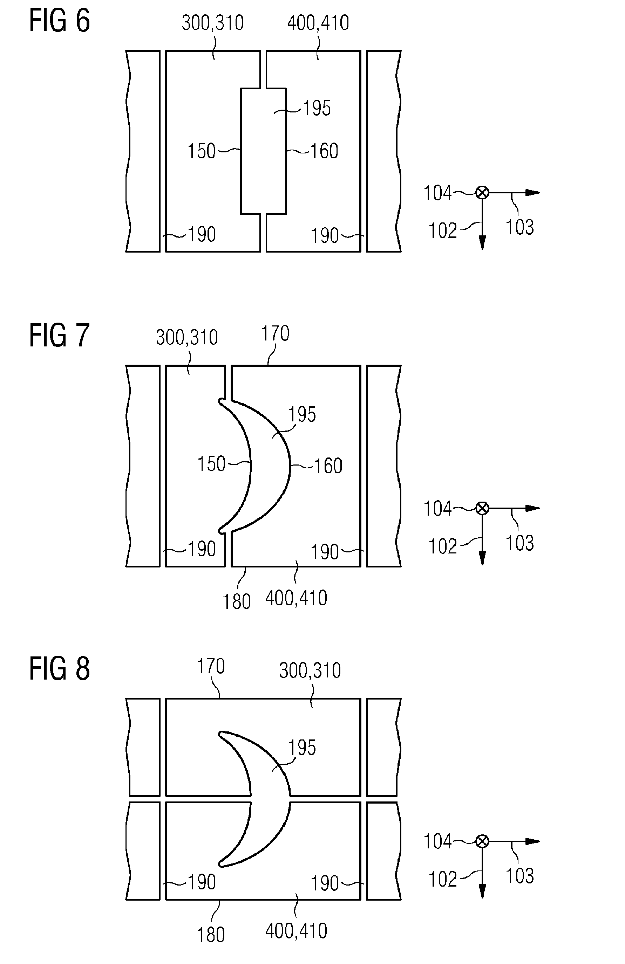

FIGS. 6 to 8 show top views in radial direction 104 of apertures of a common cavity of a root component 300 of a rotor blade assembly and a supplementary component 400 of the rotor blade assembly, respectively. It has to be stressed that for sake of clarity the root component 300 and the supplementary component 400 are illustrated with a spacing in-between each other.

In practice, these two components are attached, i.e. connected, with each other, e.g. by welding. Thus, a non-detachable attachment is advantageous. However, in certain circumstances, a detachable attachment, such as plug, wedge or rivet connection, may be advantageous, too.

FIGS. 6 to 8 illustrate a gap 190 between the root component 300 of a rotor blade assembly and a further component of a second rotor blade assembly, which is located adjacent to the root component 300 in circumferential direction 103. Analogously, a further gap 190 between the supplementary component 400 of the rotor blade assembly and another further component of a third rotor blade assembly is shown. These gaps 190 may beneficially be sealed by a seal (not shown).

FIG. 6 shows a first embodiment of an aperture 195, namely a rectangular aperture 195. The root component 300, which comprises a first platform section 310, adjoins the aperture 195 at a pressure side 150 of the rotor blade assembly. Furthermore, the supplementary component 400, which comprises a second platform section 410, adjoins the aperture 195 at a suction side 160 of the rotor blade assembly. A common platform, which is built by the first platform section 310 and the second platform section 410, is thus split in two halves. Realisation of the first embodiment is beneficial if the aerofoil shaped section 210 of the rotor blade assembly has a straight shape, at least in an intermediate region between the aerofoil shaped section 210 and the aerofoil connection section 220.

FIG. 7 shows a second embodiment of an aperture 195, namely a crescentic, i.e. a crescent-shaped aperture 195. Again, the first platform section 310 adjoins the aperture 195 at the pressure side 150 and the second platform section 410 adjoins the aperture 195 at the suction side 160. Realisation of the second embodiment is beneficial if the aerofoil shaped section 210 of the rotor blade assembly has a twisted shape.

In should be understood that the expression crescentic and crescentic-shaped does not limit itself to a singular arc or a combination of multiple arcs but also encompasses shapes defined by e.g. a spline or B-spline.

Finally, FIG. 8 shows a third embodiment of an aperture 195. The third embodiment is similar to the second embodiment, depicted in FIG. 7; however the common platform in the third embodiment is split perpendicularly compared to the second embodiment, presented in FIG. 7. In other words, in FIG. 8 the first platform section 310 comprises a leading edge side 170 and the second platform section 410 comprises a trailing edge side 180 of the rotor blade assembly. Realisation of the third embodiment is beneficial if the aerofoil shaped section 210 of the rotor blade assembly has a twisted shape. Whether the second embodiment or the third embodiment is preferred may be influenced by manufacturing issues.

Finally, it should be noted that the described embodiments may beneficially and particularly be applied to a gas turbine engine. More specifically, it may be particularly advantageous to apply the invention to a turbine section, e.g. to a final stage of that turbine section, of a gas turbine engine.

Preferably, the rotor blade assembly consists of three components, namely the aerofoil component 200, the root component 300 and the supplementary component 400.

Finally, it should also be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Rotor blade assembly comprising an aerofoil component (200), a root component (300) and a supplementary component (400),
wherein
- the aerofoil component (200) comprises
- an aerofoil shaped section (210) and
- an aerofoil connection section (220) for connecting the aerofoil component (200) with the root component (300);
- the root component (300) comprises
- a first platform section (310),
- a first root connection section (320) and
- a root section (330) arranged for securing the root component (300) to a further component, in particular a rotor disc;
- the supplementary component (400) comprises
- a second platform section (410) and
- a second root connection section (420);
- the aerofoil shaped section (210) comprises metal foam (101); and
- the aerofoil component (200), the root component (300) and the supplementary component (400) are arranged in a way that
- the root component (300) and the supplementary component (400) are attached to each other;
- the first platform section (310) and the second platform section (410) build a common platform of the rotor blade assembly;
- the first root connection section (320) and the second root connection section (420) build a common cavity between the common platform and the root section (330); and
- the aerofoil connection section (220) is secured in the common cavity.

2. Rotor blade assembly according to 1,
**characterised in that**
the common platform comprises a leading edge side (170) and a trailing edge side (180), the first platform section (310) comprising the leading edge side (170) and the second platform section (410) comprising the trailing edge side (180).

3. Rotor blade assembly according to any of the preceding claims,
**characterised in that**
the aerofoil component (200) comprises a suction side (160) and a pressure side (150), and
- the first platform section (310) adjoins the pressure side (150) and the second platform section (410) adjoins the suction side (160); or
- the first platform section (310) adjoins the suction side (160) and the second platform section (410) adjoins the pressure side (150).

4. Rotor blade assembly according to any of the preceding claims,
**characterised in that**
the common cavity is filled by the aerofoil connection section (220).

5. Rotor blade assembly according to any of the preceding claims,
**characterised in that**
the common cavity comprises an aperture (195) for the aerofoil shaped section (210).

6. Rotor blade assembly according to any of the preceding claims,
**characterised in that**
- the aerofoil shaped section (210) has an aerofoil shaped axial extension (211) and an aerofoil shaped circumferential extension (212);
- the aerofoil connection section (220) has an aerofoil connection axial extension (221) and an aerofoil connection circumferential extension (222); and that
- the aerofoil connection circumferential extension (222) is greater than the aerofoil shaped circumferential extension (212) and/or the aerofoil connection axial extension (221) is greater than the aerofoil shaped axial extension (211).

7. Rotor blade assembly according to any of the preceding claims,
**characterised in that**
the aerofoil shaped component (200), in particular the aerofoil shaped section (210), comprises a coating for protection against corrosion and/or reduction of aerodynamic losses.

8. Rotor blade assembly according to any of the preceding claims,
**characterised in that**
the rotor blade assembly comprises an unshrouded aerofoil component (200).

9. Turbomachine, in particular a gas turbine engine, comprising a rotor blade assembly according to any of the preceding claims.

10. Turbomachine according to claim 9,
**characterised in that**
- the turbomachine comprises a further rotor blade assembly;
- the further rotor blade assembly comprises a further common platform;
- the rotor blade assembly and the further rotor blade assembly are assembled in the turbomachine;
- the common platform is adjacent to the further common platform;
- the common platform is separated by the further common platform at least partially by a gap (190), and
- the gap (190) is sealed by a seal.

11. Turbomachine according to one of the claims 9 or 10, **characterised in that**
the turbomachine comprises an exit annulus section and the rotor blade assembly is a part of the exit annulus section.

12. Method of assembling a rotor blade assembly, comprising
- a first step, wherein a root component (300) of the rotor blade assembly is fitted in position with, in particular slid onto, an aerofoil component (200) of the rotor blade assembly, the aerofoil component (200) comprising an aerofoil shaped section (210) and an aerofoil connection section (220), the root component (300) comprising a first root connection section (320) and a root section (330);
- a second step, wherein a second root connection section (420) of a supplementary component (400) of the rotor blade assembly is fitted around an exposed section of the aerofoil connection section (220); and
- a third step, wherein the first root connection section (320) is attached with the second root connection section (420), in particular by welding.

13. Method of assembling a rotor blade assembly according to claim 12,
**characterised in that**
- the root component (300) comprises a first platform section (310);
- the supplementary component (400) comprises a second platform section (410); and
- the method comprises a further step, wherein the first platform section (310) is attached with the second platform section (410), in particular by welding, and builds a common platform of the rotor blade assembly.

14. Method of assembling a rotor blade assembly according to one of the claims 12 or 13,
**characterised in that**
the method comprises an additional step, wherein the root section (300) is slid into a slot of a further component, in particular a rotor disc of a turbomachine rotor.

15. Method of assembling a rotor blade assembly according to claim 14,
**characterised in that**
the additional step is executed before the first step or after the third step.
